# EUROPEAN PATENT SPECIFICATION

(11) **EP 3 579 519 B1**
(45) Date of publication and mention of the grant of the patent: **05.05.2021**
(21) Application number: 18176802.9
(22) Date of filing: 08.06.2018
(51) Int. Cl.: G06F 16/27, H04L 29/06, H04L 29/08, H04L 12/761, H04L 12/24, H04L 12/18

(54) **LINEARLY SCALABLE NETWORK SECURITY ARCHITECTURE**
LINEAR SKALIERBARE NETZWERKSICHERHEITSARCHITEKTUR
ARCHITECTURE DE SÉCURITÉ DE RÉSEAU ÉCHELONNABLE DE FAÇON LINÉAIRE

(43) Date of publication of application: 11.12.2019
(73) Proprietor: Secucloud GmbH, 20354 Hamburg (DE)
(72) Inventor: Gonzales, Erick, 82131 Gauting (DE)
(74) Representative: Grünecker Patent- und Rechtsanwälte PartG mbB

(56) References cited:
- WO-A2-00/78004
- WO-A2-2007/008852
- US-B1- 7 054 910
- US-B1- 8 914 406

## Description

### BACKGROUND OF THE INVENTION

The invention relates to methods, computer-readable storage media, and computer systems for providing network security functionality to a plurality of clients.

There are several techniques in the art to provide security to clients that are connected to a network such as the internet. Such techniques pursue different security concepts, and there are in fact a wide variety of different solutions that are implemented in different ways and by different entities in an environment. Each of the various security mechanisms is optimized to increase security in a certain aspect, for instance to protect against attacks of a particular type. Because there are so many different ways to attack or otherwise challenge the security of a computer system, operating a computer system requires a substantial number of different security mechanisms to be applied. This is difficult to achieve if each client is responsible for its own security.

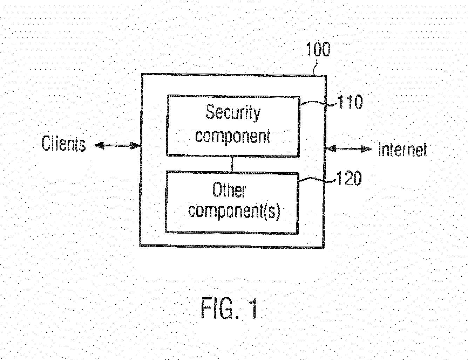

A possible solution would be to use multiple security instances to provide network security functionality to a plurality of clients. FIG. 1 depicts an example of a security instance 100 that could be used for this purpose. Such a security instance 100 could for instance include a security component 110 that runs one or more security mechanisms, and other components 120 for tasks different from actual security tasks. In this scenario, the clients do not need to implement the various security mechanisms themselves, as the network security functionality is provided by the security instances 100.

While this solution would already be a significant improvement over known systems in the art, there may still be problems when the number of clients increases. This is because the security instances should be in synchronicity with each other in order to be up-to-date at any time. Thus, each security instance 100 would not only have to use its processing capacity to run its security component 110, but also to run the other components 120, e.g., for synchronization purposes. In each security instance, the percentage of processing capacity dedicated to perform the synchronization will increase with the number of security instances. Consequently, the percentage of processing capacity available to perform the security functionality will decrease with an increasing number of security instances in the system.

This can pose a severe problem as there is a general trend to more and even more clients that need to be protected. Clients for which security functionality needs to be provided include not only personal computers and workstations, but also portable devices such as tablets, mobile phones or smartphones, and the like. Moreover, already now there are a high number of physical devices, home appliances, vehicles, embedded electronics, sensors, connectivity elements and so on which are connected to the network and are often referred to as loT (Internet of Things). Each of these clients are vulnerable to attacks and should therefore be protected. A network security architecture should therefore be able to protect not only thousands of clients, but also millions or even billions of clients by a single architecture.

When using the arrangement described above that applies a plurality of security instances such as those of FIG. 1, the number of security instances would have to increase tremendously in order to be able to provide the security services to such an enormous number of clients. However, as described above, increasing the number of security instances leads actually to a decrease of the percentage of the processing capacity in each security component 110. Where the number of security instances is already very high, adding further security instances will therefore not help anymore as the processing capacity added by these further security instances is almost completely lost in the existing security components, thereby not increasing the overall processing capacity of the system.

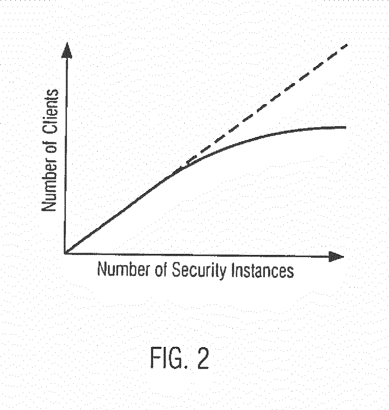

This is shown in FIG. 2 where a curve is provided to illustrate the number of clients that can be protected, as a function of the number of security instances in the architecture. If the number of security instances in the architecture is quite small, further clients can be protected by adding new security instances. However, where the number of security instances is already very high the curve is almost horizontal, so adding further security instances will increase the synchronization costs to such an extent that almost no further clients can be protected. Thus, conventional network security architectures have limits with respect to the number of clients they can protect.

WO 00/78004 A2 discloses a unified policy management system for an organization including a central policy server and remotely situated policy enforcers. A central database and policy enforcer databases storing policy settings are configured as LDAP databases adhering to a hierarchical object oriented structure. Such structure allows the policy settings to be defined in an intuitive and extensible fashion. Changes in the policy settings made at the central policy server are automatically transferred to the policy enforcers for updating their respective databases. Each policy enforcer collects and transmits health and status information in a predefined log format and transmits it to the policy server for efficient monitoring by the policy server. For further efficiencies, the policy enforcement functionalities of the policy enforcers are effectively partitioned so as to be readily implemented in hardware. The system also provides for dynamically routed VPNs where VPN membership lists are automatically created and shared with the member policy enforcers. Updates to such membership lists are also automatically transferred to remote VPN clients. The system further provides for fine grain access control of the traffic in the VPN by allowing definition of firewall rules within the VPN. In addition, policy server and policy enforcers may be configured for high availability by maintaining a backup unit in addition to a primary unit. The backup unit become active upon failure of the primary unit.

WO 2007/008852 A2 describes a platform that supports an unmanaged secured workgroup, without a server, for common user access and secure resource sharing among the computers in the group. User accounts are synchronized by replicating and modifying the accounts at each computer of the unmanaged secured workgroup. A computer advertises a change in account information to other computers in an unmanaged secured workgroup. If one of computers in the unmanaged secured workgroup determines that the change is not reflected in the current account information, the computer requests the updated account information from the advertising computer. Any conflicts between user accounts at different computers are resolved before synchronizing the user account in the unmanaged secured workgroup. Also, an application program interface (API) enables an application to query properties of a networked computer system and an unmanaged secured workgroup and to join the unmanaged secured workgroup.

### SUMMARY OF THE INVENTION

The invention is claimed in the independent claims.

Preferred embodiments are specified in the dependent claims.

An improved technique is provided which allows to provide network security functionality to a plurality of clients even where the number of clients is extremely high, e.g. where the network security architecture has to protect a million or billion of clients, or even more.

As will described in detail below, the Invention uses a plurality of security instances, in the following called nodes, that are each allocated to at least two different replication groups of limited size. The synchronization takes place within the allocated replication groups only. This keeps all the nodes in the entire plurality In synchronicity but it does not Increase the synchronization efforts per node when the number of nodes increases. Thus, the network security architecture of the invention is able to scale linearly with the number of clients, as shown by the dashed line of FIG. 2, and may therefore be free of limits with respect to its size.

In an embodiment, there is provided a method of using a plurality of nodes to provide network security functionality to a plurality of clients. Each node stores a set of operational data required to accomplish the network security functionality. The method comprises, for each node of the plurality of nodes, allocating the node to at least two different replication groups of a plurality of replication groups of nodes. The number of nodes in each replication group of the plurality of replication groups is equal to or below a predetermined limit. Each replication group of the plurality of replication groups has allocated at least two nodes of the plurality of nodes. The method further comprises, for each node of the plurality of nodes, synchronizing the set of operational data stored in the node within its allocated replication groups only.

In accordance with an embodiment, each node of the plurality of nodes is implemented as a virtual machine running in a computing environment.

Each node of the plurality of nodes may be of one of a number of different node types in an embodiment. The different node types include one or more of a security node type, a traffic steering node type, and a middleware node type. The security node type is a type of nodes dedicated to apply one or more security mechanisms to protect at least one client of the plurality of clients against an unauthorized access, denial of access, misuse, or modification of the client or of a computing resource in a computer network to which the client is connected. Each node of the security node type may have a communication interface to the computer network. The traffic steering node type is a type of nodes dedicated to control the communication traffic to and from at least one of the plurality of clients. Each node of the traffic steering node type may have a communication interface to at least one of the plurality of clients. The middleware node type Is a type of nodes dedicated to provide an interface to an operator allowing the operator to set or change configuration parameters that are taken into account by one or more node of the security node type or traffic steering node type.

There may also be an embodiment where the node type of at least one node of the plurality of nodes can be changed from one of the number of node types to a different one of the number of node types. Changing the node type may be performed automatically, for instance in response to a changed allocation of the at least one node to a replication group or in response to a changed composition of a replication group to which the at least one node is allocated.

The method may in an embodiment further comprise generating a generic node that is not of any of the node types, modifying the generic node to become a new node of one of the number of different node types, and adding the new node to the plurality of nodes.

Further, the operational data include one or more of client identification data that uniquely identifies one or more clients of the plurality of clients, client address data that indicates current or past addresses of one or more clients of the plurality of clients, whitelist data that includes whitelisted network addresses, and/or event data that describes security-related events that occurred in the past.

In another embodiment, there may be provided a computer-readable storage medium storing instructions that, when executed by one or more processors of a computing environment, cause the one or more processors to perform the method of any of the embodiments.

Moreover, there may be provided a computer system for providing network security functionality to a plurality of clients. The computer system comprises a plurality of nodes, each storing a set of operational data required to accomplish the network security functionality. Each node is allocated to at least two different replication groups of a plurality of replication groups of nodes and arranged to synchronize its set of operational data within its allocated replication groups only. The number of nodes in each replication group of the plurality of replication groups is equal to or below a predetermined limit. Each replication group of the plurality of replication groups has allocated at least two nodes of the plurality of nodes.

The computer-readable storage medium and the computer system may be embodied to operate in accordance with any one of the methods described above or in the remainder of this disclosure.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram illustrating a security instance to provide network security to clients;
FIG. 2 is a diagram illustrating how many clients can be protected by a network of security instances, and that there is a limiting effect in conventional techniques;
FIG. 3A is a schematic diagram of a plurality of nodes allocated to replication groups in accordance with an embodiment;
FIG. 3B is a schematic diagram similar to FIG. 3A and showing that the same allocation scheme can be applied to a larger number of nodes;
FIG. 4 illustrates different node types which a stem cell node can be transferred to and from, in accordance with an embodiment;
FIG. 5A is a schematic diagram similar to FIG. 3A, additionally illustrating individual node types in an embodiment;
FIG. 5B is a schematic diagram illustrating a plurality of nodes as in FIG. 5A, having the replication group allocation changed in accordance with an embodiment;
FIG. 6A illustrates a computer environment where nodes are implemented by means of virtualization in accordance with an embodiment;
FIG. 6B illustrates another computer environment using virtual nodes in an embodiment;
FIG. 6C illustrates another computer environment to implement the nodes according to an embodiment;
FIG. 7 is a flow chart of a method of changing the type of a node in accordance with an embodiment;
FIG. 8 is a flow chart of a method of changing the allocation of a node to a replication group in accordance with an embodiment; and
FIG. 9 is a block diagram illustrating a computer system or computer environment that can be used in any of the embodiments described in this disclosure.

### DETAILED DESCRIPTION OF THE INVENTION

The illustrative embodiments of the present invention will be described with reference to the figure drawings wherein like elements and structures are indicated by like reference numbers.

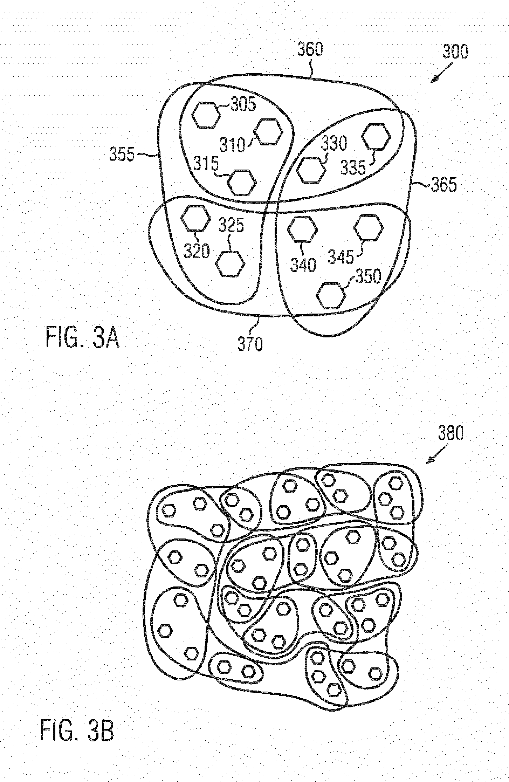

Referring now to FIG. 3A, a schematic diagram is provided that includes an arrangement 300 of nodes 305 to 350.

In an embodiment, each of the nodes take a role in providing network security functionality to a plurality of clients. In doing so, each node performs only a part of the required network security functionality, and more than one node cooperatively work together to protect the clients. In this embodiment, there is no need for each node to be connected to the clients. The roles or types of nodes usable in this embodiment will be described further below.

It is however noted that there is another embodiment where each node 305 to 350 is connected to one or more clients and performs all of the required network security tasks to protect these clients. In this embodiment, all of the nodes perform their network security functionality separately and independently from any other node.

While the nodes 305 to 350 are shown in FIG. 3A to be located at certain places, it is noted that this location does not necessarily represent a physical or geographical location. For instance, while FIG. 3A shows node 305 to be close to node 310 and far away from node 350, it could be the case that all three nodes are located at the same physical place, or node 350 is actually closer to node 305 than node 310.

In any of the embodiments described so far, the nodes 305 to 350 are allocated to two different replication groups 355 to 370. For instance, node 305 is allocated to replication group 355 and replication group 360. A replication group is a group of nodes which keep their security-related data synchronized.

While the embodiment of FIG. 3A shows each node to be allocated to two replication groups, it is noted that other embodiments exist where some or all of the nodes are allocated to more than two replication groups.

In the example of FIG. 3A, each replication group includes five nodes. For instance, replication group 355 includes nodes 305, 310, 315, 320 and 325. Replication group 360 includes nodes 305, 310, 315, 330 and 335. It is noted that the number of five nodes per replication group is just an example, and other replication group sizes are used in other embodiments.

It is further noted that embodiments exist where the various replication groups are of different sizes. However, in all embodiments, the number of nodes in each replication group is equal to or below a predetermined limit. To give an example, a system may have one million nodes and the predetermined limit may be set to be fifty. This example may be implemented by having some or most of the replication groups to be of size fifty, and the remaining replication groups of smaller sizes.

Thus, there may be replication groups of different sizes as long as the largest replication group in the system does not exceed the predetermined limit. Further, as mentioned above, each node is allocated to two or more replication groups, and even the replication groups allocated to the same node need not to be of the same size. That is, embodiments exist where a particular node is allocated to a first replication group of one size and a second replication group of another size.

Referring now to FIG. 3B, a system 380 of nodes is shown similar to that of system 300 of FIG. 3A. The allocation of nodes to replication groups is the same, i.e., each node is allocated to two different replication groups, and each replication group include five nodes. What can be seen from FIG. 3B is that the number of nodes has increased. Thus, FIG. 3B shows that the allocation approach of the embodiments can be used irrespective of how many nodes exist. In other words, the system of nodes can be scaled up arbitrarily, and neither the number of replication groups per node, nor the number of nodes per replication group nor the predetermined limit need to be changed.

This advantageously has the effect that the synchronization costs per node are limited and the entire system of nodes may therefore scale linearly with the number of clients. In the embodiments described above, and also in the embodiments described in the following, each node stores a set of operation data required to accomplish the network security functionality, and replication groups are groups of nodes where synchronization takes place. Thus, the operation data of the nodes are synchronized (or replicated) within the respective replication groups only. Taking the example of FIG. 3A, the operation data of node 305 will be in synchronicity with nodes 310, 315, 320 and 325 because all these nodes are in the same replication group 355, and in addition, nodes 305, 310, 315, 330 and 335 will be in synchronicity because they are contained in replication group 360. Thus, all seven nodes 305, 310, 315, 320, 325, 330 and 335 will be in synchronicity because they are contained in replication groups 355 and 360 which overlap in at least one node.

For the same reason, nodes 340, 345 and 350 will be in synchronicity with nodes 330 and 335 and also with nodes 320 and 225 because replication groups 365 and 370 overlap. Accordingly, all of the nodes in system 300 of FIG. 3A have their operational data synchronized with each other even though any synchronization tasks are performed within replication groups only. In other words, as there are no replication groups having more than five nodes, nowhere in the system is there any synchronization action performed between more than five nodes. Nevertheless, the operational data of all nodes of the entire system 300 will be in synchronicity.

Referring now again to FIG. 3B, the same is valid for this bigger system 380 of nodes. Again, nowhere in the system is a synchronization mechanism which has to synchronize more than five nodes, and the operational data of the entire system 380 will nevertheless be synchronized.

This leads to the advantageous effect mentioned above. Even though the system 380 is larger than the system 300, the synchronization costs per node remain unchanged. The system could be enlarged to encompass one million of nodes, or more, but the synchronization cost per node would still be the cost of synchronizing the operational data with no more than six nodes (the other nodes in the two overlapping replication groups). Accordingly, the number of clients which can be protected by the entire system will linearly scale with the number of nodes, as the percentage of the processing capacity used in each node for synchronizing the operational data remain unchanged. Thus, unlike conventional systems, the embodiments will follow the dashed line of FIG. 2, i.e., the number of clients that can be protected will linearly increase with the number of nodes.

As mentioned above, operational data is data stored in each node and required to accomplish the network security functionality. In an embodiment, the operational data includes client identification data that uniquely identifies one or more of the clients. The operational data may further include client address data that indicates one or more addresses of one or more of the clients. Thus, the client identification data and/or the client address data uniquely specify which clients are to be protected and/or how they can be connected. The client identification data and/or client address data may have a time stamp as the data may vary with time. For instance, the client address data may be the client's IP address, and this may be a temporary address.

The operational data may also include event data that describes security-related events which occurred in the past. For instance, if the network security functionality had blocked a particular action in the network for security reasons, then this blocking event may be stored in the operational data in an embodiment. This may include the type of blocking event, the reason for the blocking, the time the event occurred, any addresses that have been blocked, and client identification data and/or client address data of the client that had been protected.

To give yet another example of operational data in accordance with an embodiment, there may also be whitelist data that includes network addresses for which some or all of the network security mechanisms should not apply. The whitelist data may be accompanied with the same time stamp and client data as the event data, and the whitelist data may further include an expiration data, leading to the whitelist being a temporary whitelist. An example of a temporary client-specific whitelist entry would be a case where a certain network address was blocked by the network security functionality and a client expressly unblocked this access, for instance by pressing an "override" button on a blocking page shown in a web browser of the client.

As described above, all of this operational data (and other data as well) can be synchronized throughout the entire system of nodes irrespective of the total number of nodes without increasing the synchronization costs per node, leading to linear scalability of the entire system with respect to the number of clients that are to be protected. This advantageous effect is achieved irrespective of how exactly the nodes are implemented. That is, even where each node is implemented as a separate physical device, the linear scalability would be achieved. However, particularly advantageous embodiments are those which have the nodes implemented as software, for instance as a virtual node. When implementing the nodes as software, the number of nodes in the system can be automatically increased or decreased as need be. Embodiments of how this can be achieved will be described below.

Irrespective of whether the nodes are implemented by hardware or by software, embodiments exist where a particular node performs only a part of the network security functionality. For instance, a node may be of a security node type dedicated to apply one or more security mechanisms to protect clients against an unauthorized access, denial of access, misuse or modification of the client or of a computing or storage resource in a computer network to which the client is connected. For instance, a security node could run a firewall, a content or packet analyzer, it could make checks at the DNS layer, check SSL certificates, run a sandbox, or the like. Accordingly, a security node has a communication interface to the computer network, i.e., to the internet.

Other nodes may be of the traffic steering node type. A traffic steering node is dedicated to control the communication traffic to and from the clients, and therefore has a communication interface to at least some of the clients. The tasks performed by the traffic steering node include traffic or routing optimization, balancing, VPN and DNS control, and so on.

Another node type in an embodiment may be that of middleware nodes. A middleware node is dedicated to provide an interface to an operator to allow the operator to set or change configuration parameters that are taken into account by the security nodes and/or the traffic steering nodes. For instance, if the network security functionality is provided to the clients as a service in the name of a provider, the provider may act as the operator through the interface to the middleware nodes to set or change accounting, subscription and provisioning data.

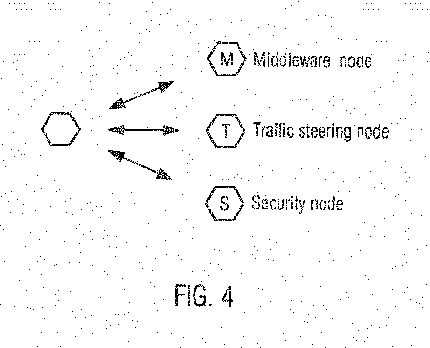

Thus, referring to FIG. 4, a node may be of a particular node type including the node types discussed above, i.e., the security node type, the traffic steering nodetype, and the middleware node type. It is noted that there may be other node types as well in further embodiments.

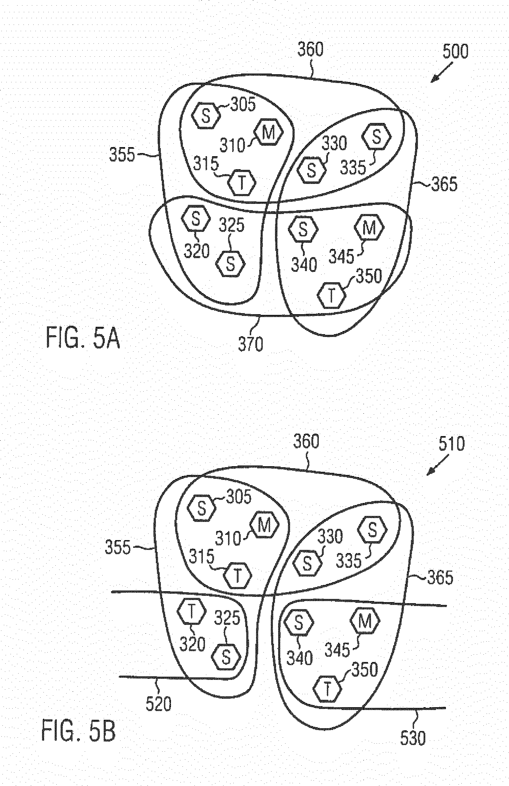

When applying these node types to the embodiment of FIG. 3A, this may lead to a system 500 as shown in FIG. 5A. As can be seen, the arrangement of nodes and their allocation to replication groups are the same as in FIG. 3A, but the nodes are specialized to only one of the dedicated node types. For instance, node 305 is of the security node type, node 310 is of the middleware node type, and node 315 is of the traffic steering node type.

In an embodiment, the node types and/or replication groups may be chosen such that each replication group includes at least one node of each type. This is the case in FIG. 5A where each of the replication groups 355, 360, 365 and 370 include at least one security node, at least one traffic steering node, and at least one middleware node.

It is noted that the number of nodes of each node type must not be equal in each replication group. For instance, a replication group may include more security nodes than traffic steering nodes. Further, the number of node types may be different from replication group to replication group. For instance, there may be three security nodes in a replication group whereas another replication group of the same system may have two or four security nodes.

Referring now to FIG. 5B, it is noted that the allocation of nodes to replication groups may change with time. For instance, while nodes 320, 325, 340, 345 and 350 had been allocated to replication group 370 in FIG. 5A, this replication group has ceased to exist in the system 510 of FIG. 5B, and nodes 320 and 325 are now allocated to replication group 520 whereas nodes 340, 345 and 350 are now allocated to replication group 530. Such allocation changes allow to flexibly adapt the system of nodes to any changes that occur in the plurality of clients and/or in the plurality of nodes. For instance, if new nodes are added to the system or if there are nodes which have terminated their operation, the allocation of nodes to replication groups may be updated even for those nodes which are not directly affected.

When comparing FIGs. 5A and 5B, it can be seen that there is a further change: node 320 has changed its node type from security to traffic steering. Thus, in an embodiment, it is not only possible to re-define replication groups and change the allocation of nodes to replication groups, but each node may also change its node type. A change of node type may occur at any time for arbitrary reasons but it may also, in an embodiment, be a consequence of changing the allocation of the respective node to a replication group. Taking the example of FIGs. 5A and 5B, node 320 was a member of replication groups 355 and 370 which each already included a traffic steering node 315, 350 and a middleware node 310, 345. It was therefore beneficial in the system 500 of FIG. 5A to have the node 320 implemented as a security node. In the system 510 of FIG. 5B, the node 320 has become a member of replication group 520, and it was then found to be more beneficial for this node to be of the traffic steering node type, for instance because there was no traffic steering node in the replication group 520 before.

Thus, it may be advantageous that nodes are able to change their node types in an embodiment. This could be most advantageously achieved by implementing stem cell functionality to the nodes. In such an embodiment, a node is generated as a generic node, i.e., a stem cell node, which is not yet of any of the node types. This generic node may then be modified to become a node of one of the node types mentioned above. If at a later point in time, a node has to change its type, for instance from the security node type to the traffic steering node type like node 320 in FIGs. 5A and 5B, then this node may first become a generic node, i.e., a stem cell node, and may then become a new node of the desired type. This stem cell functionality is particularly advantageous because it allows to easily and flexibly change node types and therefore adapt the network security architecture to any kind of changed conditions.

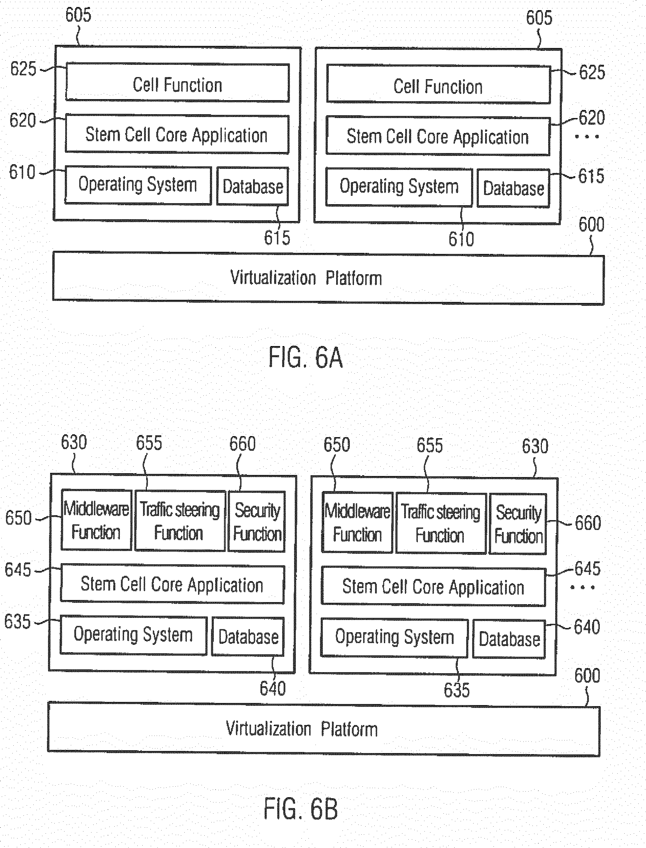

As mentioned above, nodes may be implemented as virtual nodes in an embodiment. FIG. 6A shows an architecture that may be used in accordance with an embodiment. There is provided a virtualization platform 600 which creates and maintains a number of nodes 605 as virtual machines. Each node has an operating system 610 and may further have a database 615 to store the set of operational data required to accomplish the network security functionality. Each virtual node 605 may then run an application program 620 on top of the operating system 610, for instance to establish the stem cell functionality if this functionality is provided. This stem cell core application 620 performs a cell function 625 to implement the particular node type of the respective node. For instance, where a node is of the security node type, the stem cell core application 620 runs in a mode where the cell function 625 performs security functions. Thus, the cell function 625 is then actually the security node function of the node. When the node changes its type from the security node type to the traffic steering node type, the stem cell core application 620 will stop the cell function 625 (being a security function) and re-run the cell function 625 as traffic steering function. This can be done automatically without any human interaction.

FIG. 6B depicts another embodiment that implements nodes as virtual nodes. Again, there is a virtualization platform 600 which creates and maintains virtual nodes 630, and each virtual node runs an operating system 635 and a database 640. In the embodiment of FIG. 6B, each node 630 runs an application program such as a stem cell core application 645 on top of the operating system 635, and this application 645 implements multiple functions at the same time, including the security function 660, the traffic steering function 655, and the middleware function 650.

In an embodiment, the stem cell core application 645 is arranged to activate only one of the functions 650, 655, 660 at any time, so the other functions are deactivated. When changing the node type of a virtual node, this can be achieved by deactivating the function currently in use, and activating the needed function. Again, this can be done automatically.

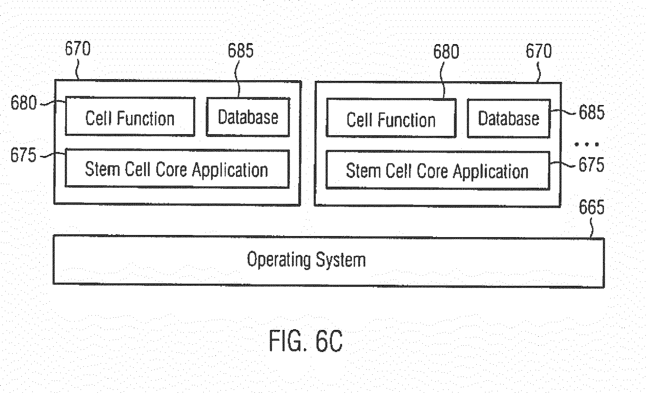

A further embodiment is shown in FIG. 6C which does not make use of virtualized machines. Rather, the operating system 665 runs on the hardware itself, even though this hardware may be actually implemented using multiple physical devices in a distributed network, like in any other embodiment. On top of the operating system, the nodes 670 are implemented to include an application program such as a stem cell core application 675 and a database 685 as described above. Further, there is a cell function 680 as in FIG. 6A, and it is noted that other embodiments may make use of individual functions instead, as was discussed with FIG. 6B. The nodes 670 may be implemented as separate processes running as on the operating system 665 but may also be implemented using container techniques, i.e., application virtualization techniques.

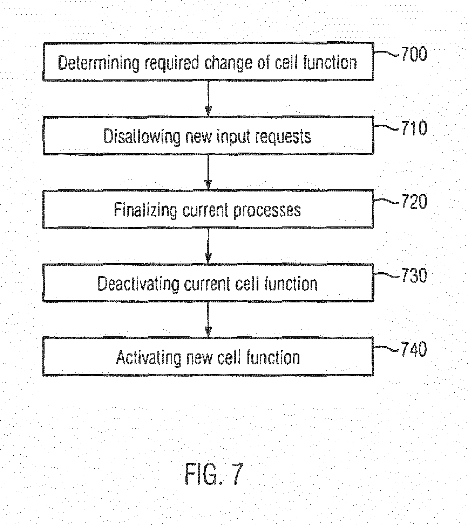

In any of these techniques or in any other implementation of nodes in a network security architecture of the embodiments, a node may change its node type using the process shown in FIG. 7. In step 700, it is determined that the node type should change, i.e., the cell function should take on another function. This determination may be performed by the virtualization platforms 600 of FIGs. 6A or 6B, or by the nodes 605, 630, 670 themselves, for instance by the stem cell core applications 620, 645, 675.

Once it is determined that a certain node should change its type, any new input requests to this node are disallowed in step 710. For instance, if a security node has been determined to change its type to become a traffic steering node, the security node will not accept any further requests that would make use of its security mechanisms.

The node then finalizes its current processes in step 720. For instance, if the node is a security node, it finishes its pending security checks before the process of FIG. 7 continues.

Once this has been done, the node is idle and its current cell function can be deactivated in step 730. Afterwards, the new cell function is activated in step 740.

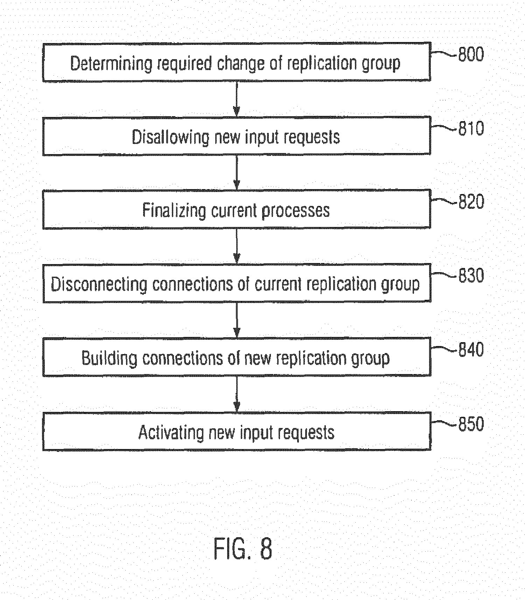

Referring now to FIG. 8, a process is shown of how to change the allocation of nodes to a replication group in an embodiment. This process may for instance be used when stepping from FIG. 5A to FIG. 5B.

In step 800, it is determined that there should be a change of replication group allocations. Again, this determination may be done by the virtualization platforms or the nodes.

Once it has been determined that a particular replication group should cease to exist, for instance replication group 370 in FIG. 5A, any new requests to synchronize operational data within this group are disallowed in step 810.

Thus, from this time on, the nodes in this replication group will not perform new synchronization acts. Pending synchronization actions will however be finished properly and this is done in step 820.

Once there is no synchronization action anymore between the nodes of the replication group which originated from the fact that the nodes pertained to this replication group, the replication group is dissolved in step 830. Taking the example of FIG. 5A, there is then no further synchronization action between nodes 320, 325, 340, 345, 350 which originated from the fact that these nodes were grouped together as replication group 370. Accordingly, replication 370 is canceled, i.e., the nodes 320, 325, 340, 345, 350 are no longer allocated to this replication group.

Afterwards, the nodes are allocated to their respective new replication groups. Referring to FIG. 5B, nodes 320, 325 are now allocated to replication group 520, and nodes 340, 345, 350 are allocated to replication group 530 in step 840.

Once the new replication groups have been established and the nodes properly allocated, the synchronization action in these groups are activated in step 850.

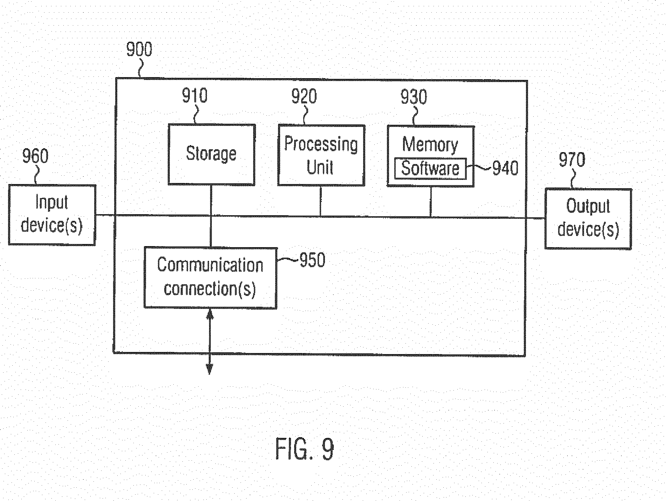

In any of the embodiments described above, using virtualization techniques or other techniques, the embodiments may be implemented using one or more of the computer systems or computer environments as shown in FIG. 9. The computer environment 900 includes one or more processing units 920 and memories 930. The processing unit 920 executes computer-executable instructions and may be one or more real or virtual processors or combinations thereof. The memory 930 may be any type of volatile memories such at RAM, caches or registers and/or any type of non-volatile memory such as flash memory, ROM, EEPROM, etc.

As shown in FIG. 9, the memory 930 may store software 940 which may in particular include the virtualization platforms, operating systems and stem cell core applications together with Its functions. The memory 930 may also hold the database used in the embodiments to store the operational data.

As shown in FIG. 9, there may be further a storage 910, one or more input devices 960 and/or output devices 970, and communication connections 950 such as networking devices. The storage 910 may be removable or non-removable and the input and output devices 960, 970 may be of any type. In particular, it is noted that not all of the elements in FIG. 9 need to be present in each embodiment, and it is further noted that the environment 900 and/or any of its components may be implemented as one or more servers, for example as a farm of networked servers, clustered server environment distributed storage or cloud network of computing devices.

While the invention has been described with respect to the physical embodiments constructed in accordance herewith, it will be apparent to those skilled in the art that various modification, variation and improvements of the present invention may be made in the light of the above teachings and within the purview of the appended claims. Accordingly, it is to be understood that the invention is not limited by the specific illustrative embodiments, but only by the scope of the appended claims.

## Claims

1. A method of using a plurality of nodes (305-350, 605, 630, 670) to provide network security functionality to a plurality of clients, each node storing a set of operational data required to accomplish said network security functionality, the method comprising:
for each node of the plurality of nodes, allocating the node to at least two different replication groups of a plurality of replication groups (360-370, 520, 530) of nodes, the number of nodes in each replication group of the plurality of replication groups being equal to or below a predetermined limit, each replication group of the plurality of replication groups having allocated at least two nodes of the plurality of nodes; and
for each node of the plurality of nodes, synchronizing the set of operational data stored in the node within its allocated replication groups only,
wherein said operational data include one or more of:
client identification data uniquely identifying one or more clients of said plurality of clients;
client address data indicating current or past addresses of one or more clients of said plurality of clients;
whitelist data including whitelisted network addresses; and
event data describing security-related events that occurred in the past.

2. The method of claim 1, wherein each node of the plurality of nodes is implemented as a virtual machine (605, 630) running in a computing environment.

3. The method of claim 1 or 2, wherein each node of the plurality of nodes is of one of a number of different node types, said different node types including one or more of:
a security node type being a type of nodes dedicated to apply one or more security mechanisms to protect at least one client of the plurality of clients against an unauthorized access, denial of access, misuse, or modification of the client or of a computing resource in a computer network to which the client is connected, each node of said security node type having a communication interface to said computer network;
a traffic steering node type being a type of nodes dedicated to control the communication traffic to and from at least one of said plurality of clients, each node of said traffic steering node type having a communication interface to at least one of said plurality of clients; and
a middleware node type being a type of nodes dedicated to provide an interface to an operator allowing the operator to set or change configuration parameters that are taken into account by one or more node of the security node type or traffic steering node type.

4. The method of claim 3, further comprising:
changing (700-740) the node type of at least one node of the plurality of nodes from one of the number of node types to a different one of the number of node types.

5. The method of claim 4, wherein changing the node type is performed automatically in response to a changed allocation of the at least one node to a replication group or in response to a changed composition of a replication group to which the at least one node is allocated.

6. The method of one of claims 3 to 5, further comprising:
generating a generic node that is not of any of said node types;
modifying said generic node to become a new node of one of said number of different node types; and
adding said new node to said plurality of nodes.

7. A computer-readable storage medium storing instructions that, when executed by one or more processors of a computing environment, cause said one or more processors to perform the method of one of claims 1 to 6.

8. A computer system (900) for providing network security functionality to a plurality of clients, the computer system comprising:
a plurality of nodes (305-350, 605, 630, 670), each node storing a set of operational data required to accomplish said network security functionality, each node being allocated to at least two different replication groups of a plurality of replication groups (360-370, 520, 530) of nodes and arranged to synchronize its set of operational data within its allocated replication groups only, the number of nodes in each replication group of the plurality of replication groups being equal to or below a predetermined limit, each replication group of the plurality of replication groups having allocated at least two nodes of the plurality of nodes,
wherein said operational data include one or more of:
client identification data uniquely identifying one or more clients of said plurality of clients;
client address data indicating current or past addresses of one or more clients of said plurality of clients;
whitelist data including whitelisted network addresses; and
event data describing security-related events that occurred in the past.

9. The computer system of claim 8, further comprising a virtualization platform (600) arranged to implement each node of the plurality of nodes as a virtual machine.

10. The computer system of claim 8 or 9, wherein each node of the plurality of nodes is of one of a number of different node types, said different node types including one or more of:
a security node type being a type of nodes arranged to apply one or more security mechanisms to protect at least one client of the plurality of clients against an unauthorized access, denial of access, misuse, or modification of the client or of a computing resource in a computer network to which the client is connected, each node of said security node type having a communication interface to said computer network;
a traffic steering node type being a type of nodes arranged to control the communication traffic to and from at least one of said plurality of clients, each node of said traffic steering node type having a communication interface to at least one of said plurality of clients; and
a middleware node type being a type of nodes arranged to provide an interface to an operator allowing the operator to set or change configuration parameters that are taken into account by one or more node of the security node type or traffic steering node type.

11. The computer system of claim 10, wherein the computer system is arranged to change the node type of at least one node of the plurality of nodes from one of the number of node types to a different one of the number of node types.

12. The computer system of claim 11, wherein the computer system is arranged to change the node type automatically in response to a changed allocation of the at least one node to a replication group or in response to a changed composition of a replication group to which the at least one node is allocated.

13. The computer system of one of claims 10 to 12, wherein the computer system is arranged to generate a generic node that is not of any of said node types, modify said generic node to become a new node of one of said number of different node types, and add said new node to said plurality of nodes.

## Patentansprüche

1. Verfahren zur Verwendung mehrerer Knoten (305-350, 605, 630, 670) zur Bereitstellung einer Netzwerksicherheitsfunktion für mehrere Clients, wobei jeder Knoten einen Satz an Betriebsdaten, die zum Erreichen der Netzwerksicherheitsfunktion erforderlich sind, speichert, wobei das Verfahren umfasst:
für jeden Knoten der mehreren Knoten, Zuweisen des Knoten zu mindestens zwei unterschiedlichen Replikationsgruppen aus mehreren Replikationsgruppen (360-370, 520, 530) aus Knoten, wobei die Anzahl der Knoten in jeder Replikationsgruppe der mehreren Replikationsgruppen gleich einer vorbestimmten Grenze oder kleiner ist, wobei jeder Replikationsgruppe der mehreren Replikationsgruppen mindestens zwei Knoten der mehreren Knoten zugewiesen sind; und
für jeden Knoten der mehreren Knoten, Synchronisieren des Satzes an Betriebsdaten, die in dem Knoten gespeichert sind, nur mit seinen ihm zugewiesenen Replikationsgruppen,
wobei die Betriebsdaten beinhalten:
Client-Identifizierungsdaten, die einen oder mehrere Clients der mehreren Clients eindeutig kennzeichnen; und/oder
Client-Adressdaten, die aktuelle oder vergangene Adressen eines oder mehrerer Clients der mehreren Clients angeben;
Weiße-Liste-Daten, die validierte Netzwerkadressen enthalten; und
Ereignisdaten, die sicherheitsbezogene Ereignisse beschreiben, die in der Vergangenheit auftraten.

2. Verfahren nach Anspruch 1, wobei jeder Knoten der mehreren Knoten als eine virtuelle Maschine (605, 630), die in einer Rechenumgebung ausgeführt wird, implementiert wird.

3. Verfahren nach Anspruch 1 oder 2, wobei jeder Knoten der mehreren Knoten einer aus einer Anzahl unterschiedlicher Knotenarten ist, wobei die unterschiedlichen Knotenarten beinhalten:
eine Sicherheitsknotenart, die eine Art von Knoten ist, die dazu ausgelegt ist, einen oder mehrere Sicherheitsmechanismen anzuwenden, um mindestens einen Client der mehreren Clients gegenüber einem nicht autorisierten Zugriff, einer Verweigerung des Zugriffs, einem Missbrauch oder einer Modifizierung des Client oder einer Rechenressource in einem Computernetzwerk, mit welchem der Client verbunden ist, zu schützen, wobei jeder Knoten der Sicherheitsknotenart eine Kommunikationsschnittstelle zu dem Computernetzwerk hat; und/oder
eine datenverkehrslenkende Knotenart, die eine Art an Knoten ist, die dazu ausgelegt sind, den Kommunikationsverkehr zu und von mindestens einem der mehreren Clients zu steuern, wobei jeder Knoten der datenverkehrssteuernden Knotenart eine Kommunikationsschnittstelle zu mindestens einem der mehreren Clients hat; und/oder
eine Middleware-Knotenart, die eine Art an Knoten ist, die dazu ausgelegt sind, eine Schnittstelle zu einem Operator bereitzustellen, wobei der Operator dann in der Lage ist, Konfigurationsparameter festzulegen oder zu ändern, die von einem oder mehreren Knoten der Sicherheitsknotenart oder der datenverkehrslenkenden Knotenart berücksichtigt werden.

4. Verfahren nach Anspruch 3, das ferner umfasst:
Wechseln (700-740) der Knotenart mindestens eines Knotens der mehreren Knoten von einer Art der Anzahl aus Knotenarten auf eine andere der Anzahl aus Knotenarten.

5. Verfahren nach Anspruch 4, wobei Wechseln der Knotenart automatisch in Reaktion auf eine geänderte Zuweisung des mindestens einen Knotens zu einer Replikationsgruppe oder in Reaktion auf eine geänderte Zusammensetzung einer Replikationsgruppe, der der mindestens eine Knoten zugewiesen ist, ausgeführt wird.

6. Verfahren nach einem der Ansprüche 3 bis 5, das ferner umfasst:
Erzeugen eines generischen Knotens, der nicht zu einer der Knotenarten gehört;
Modifizieren des generischen Knotens derart, dass er ein neuer Knoten aus einer Art der Anzahl aus unterschiedlichen Knotenarten wird; und
Hinzufügen des neuen Knotens zu den mehreren Knoten.

7. Computerlesbares Speichermedium, das Befehle speichert, die bei ihrer Ausführung durch einen oder mehrere Prozessoren einer Rechenumgebung bewirken, dass der eine oder die mehreren Prozessoren das Verfahren nach einem der Ansprüche 1 bis 6 ausführen.

8. Computersystem (900) zur Bereitstellung einer Netzwerksicherheitsfunktion für mehrere Clients, wobei das Computersystem aufweist:
mehrere Knoten (305-350, 605, 630, 670), wobei jeder Knoten einen Satz an Betriebsdaten, die zum Erreichen der Netzwerksicherheitsfunktion erforderlich sind, speichert, wobei jeder Knoten mindestens zwei unterschiedlichen Replikationsgruppen aus mehreren Replikationsgruppen (360-370, 520, 530) aus Knoten zugeordnet und ausgebildet ist, einen Satz an Betriebsdaten nur innerhalb seiner ihm zugewiesenen Replikationsgruppe zu synchronisieren, wobei die Anzahl an Knoten in jeder Replikationsgruppe der mehreren Replikationsgruppen gleich einer vorbestimmten Grenze oder kleiner ist, wobei jeder Replikationsgruppe der mehreren Replikationsgruppen mindestens zwei Knoten der mehreren Knoten zugewiesen sind,
wobei die Betriebsdaten beinhalten:
Client-Identifizierungsdaten, die eindeutig einen oder mehrere Clients der mehreren Clients kennzeichnen; und/oder
Client-Adressdaten, die aktuelle oder vergangene Adressen eines oder mehrerer Clients der mehreren Clients kennzeichnen; und/oder
Weiße-Liste-Daten mit validierten Netzwerkadressen; und/oder Ereignisdaten, die sicherheitsbezogene Ereignisse beschreiben, die in der Vergangenheit auftraten.

9. Computersystem nach Anspruch 8, das ferner eine Virtualisierungsplattform (600) aufweist, die ausgebildet ist, jeden Knoten der mehreren Knoten als eine virtuelle Maschine zu implementieren.

10. Computersystem nach Anspruch 8 oder 9, wobei jeder Knoten der mehreren Knoten einer aus einer Anzahl unterschiedlicher Knotenarten ist, wobei die unterschiedlichen Knotenarten beinhalten:
eine Sicherheitsknotenart, die eine Art von Knoten ist, die dazu ausgelegt ist, einen oder mehrere Sicherheitsmechanismen anzuwenden, um mindestens einen Client der mehreren Clients gegenüber einem nicht autorisierten Zugriff, einer Verweigerung des Zugriffs, einem Missbrauch oder einer Modifizierung des Client oder einer Rechenressource in einem Computernetzwerk, mit welchem der Client verbunden ist, zu schützen, wobei jeder Knoten der Sicherheitsknotenart eine Kommunikationsschnittstelle zu dem Computernetzwerk hat; und/oder
eine datenverkehrslenkende Knotenart, die eine Art an Knoten ist, die dazu ausgelegt sind, den Kommunikationsverkehr zu und von mindestens einem der mehreren Clients zu steuern, wobei jeder Knoten der datenverkehrssteuernden Knotenart eine Kommunikationsschnittstelle zu mindestens einem der mehreren Clients hat; und/oder eine Middleware-Knotenart, die eine Art an Knoten ist, die dazu ausgelegt sind, eine Schnittstelle zu einem Operator bereitzustellen, wobei der Operator dann in der Lage ist, Konfigurationsparameter festzulegen oder zu ändern, die von einem oder mehreren Knoten der Sicherheitsknotenart oder der datenverkehrslenkenden Knotenart berücksichtigt werden.

11. Computersystem nach Anspruch 10, wobei das Computersystem ausgebildet ist, die Knotenart mindestens eines Knotens der mehreren Knoten von einer Art der Anzahl aus Knotenarten auf eine andere Art der Anzahl an Knotenarten zu wechseln.

12. Computersystem nach Anspruch 11, wobei das Computersystem ausgebildet ist, die Knotenart automatisch in Reaktion auf eine geänderte Zuweisung des mindestens einen Knotens zu einer Replikationsgruppe oder in Reaktion auf eine geänderte Zusammensetzung einer Replikationsgruppe, die dem mindestens einen Knoten zugewiesen ist, zu wechseln.

13. Computersystem nach einem der Ansprüche 10 bis 12, wobei das Computersystem ausgebildet ist, einen generischen Knoten zu erzeugen, der nicht zu einer der Knotenarten gehört, den generischen Knoten zu modifizieren, so dass er ein neuer Knoten einer Art der Anzahl aus unterschiedlichen Knotenarten wird, und den neuen Knoten den mehreren Knoten hinzuzufügen.

## Revendications

1. Procédé d'utilisation d'une pluralité de nœuds (305-350, 605, 630, 670) pour fournir une fonctionnalité de sécurité de réseau à une pluralité de clients, chaque nœud stockant un ensemble de données opérationnelles requises pour accomplir ladite fonctionnalité de sécurité de réseau, le procédé comprenant :
pour chaque nœud de la pluralité de nœuds, l'attribution du nœud à au moins deux groupes de réplication différents d'une pluralité de groupes de réplication (360-370, 520, 530) de nœuds, le nombre de nœuds dans chaque groupe de réplication de la pluralité de groupes de réplication étant inférieur ou égal à une limite prédéterminée, au moins deux nœuds de la pluralité de nœuds étant attribués à chaque groupe de réplication de la pluralité de groupes de réplication ; et
pour chaque nœud de la pluralité de nœuds, la synchronisation de l'ensemble de données opérationnelles stocké dans le nœud uniquement dans ses groupes de réplication attribués,
dans lequel lesdites données opérationnelles comprennent un ou plusieurs éléments parmi :
des données d'identification de client identifiant de manière unique un ou plusieurs clients de ladite pluralité de clients ;
des données d'adresse de client indiquant des adresses actuelles ou passées d'un ou plusieurs clients de ladite pluralité de clients ;
des données de liste blanche comprenant des adresses de réseau sur liste blanche ; et
des données d'événement décrivant des événements relatifs à la sécurité qui se sont produits dans le passé.

2. Procédé selon la revendication 1, dans lequel chaque nœud de la pluralité de nœuds est implémenté comme une machine virtuelle (605, 630) fonctionnant dans un environnement informatique.

3. Procédé selon la revendication 1 ou 2, dans lequel chaque nœud de la pluralité de nœuds est d'un type parmi un nombre de différents types de nœud, lesdits différents types de nœud comprenant un ou plusieurs types parmi :
un type de nœud de sécurité qui est un type de nœud dédié à l'application d'un ou plusieurs mécanismes de sécurité pour protéger au moins un client de la pluralité de clients contre un accès non autorisé, un déni d'accès, une utilisation abusive, ou une modification du client ou d'une ressource informatique dans un réseau informatique auquel le client est connecté, chaque nœud dudit type de nœud de sécurité ayant une interface de communication avec ledit réseau informatique ;
un type de nœud d'orientation de trafic, qui est un type de nœud dédié à contrôler le trafic de communication vers et depuis au moins un client de ladite pluralité de clients, chaque nœud dudit type de nœud d'orientation de trafic ayant une interface de communication avec au moins un client de ladite pluralité de clients ; et
un type de nœud intergiciel qui est un type de nœud dédié à fournir une interface pour un opérateur permettant à l'opérateur de régler ou changer des paramètres de configuration qui sont pris en compte par un ou plusieurs nœuds de type nœud de sécurité ou de type nœud d'orientation de trafic.

4. Procédé selon la revendication 3, comprenant en outre :
le changement (700-740) du type de nœud d'au moins un nœud de la pluralité de nœuds d'un type du nombre de types de nœud à un type différent du nombre de types de nœud.

5. Procédé selon la revendication 4, dans lequel le changement du type de nœud est mis en œuvre automatiquement en réponse à une attribution changée dudit au moins un nœud à un groupe de réplication ou en réponse à une composition changée d'un groupe de réplication auquel ledit au moins un nœud est attribué.

6. Procédé selon l'une des revendications 3 à 5, comprenant en outre :
la génération d'un nœud générique qui n'est d'aucun desdits types de nœud ;
la modification dudit nœud générique pour devenir un nouveau nœud d'un type dudit nombre de différents types de nœud ; et
l'ajout dudit nouveau nœud à ladite pluralité de nœuds.

7. Support de stockage lisible par un ordinateur sur lequel sont stockées des instructions qui, quand elles sont exécutées par un ou plusieurs processeurs dans un environnement informatique, commandent auxdits un ou plusieurs processeurs de mettre en œuvre le procédé selon l'une des revendications 1 à 6.

8. Système informatique (900) pour fournir une fonctionnalité de sécurité de réseau à une pluralité de clients, le système informatique comprenant :
une pluralité de nœuds (305-350, 605, 630, 670), chaque nœud stockant un ensemble de données opérationnelles requises pour accomplir ladite fonctionnalité de sécurité de réseau, chaque nœud étant attribué à au moins deux groupes de réplication différents d'une pluralité de groupes de réplication (360-370, 520, 530) de nœuds et agencé pour synchroniser son ensemble de données opérationnelles uniquement dans ses groupes de réplication attribués, le nombre de nœuds dans chaque groupe de réplication de la pluralité de groupes de réplication étant inférieur ou égal à une limite prédéterminée, chaque groupe de réplication de la pluralité de groupes de réplication étant attribué à au moins deux nœuds de la pluralité de nœuds,
dans lequel lesdites données opérationnelles comprennent un ou plusieurs éléments parmi :
des données d'identification de client identifiant de manière unique un ou plusieurs clients de ladite pluralité de clients ;
des données d'adresse de client indiquant des adresses actuelles ou passées d'un ou plusieurs clients de ladite pluralité de clients ;
des données de liste blanche comprenant des adresses de réseau sur liste blanche ; et
des données d'événement décrivant des événements relatifs à la sécurité qui se sont produits dans le passé.

9. Système informatique selon la revendication 8, comprenant en outre une plate-forme de virtualisation (600) agencée pour implémenter chaque nœud de la pluralité de nœuds comme une machine virtuelle.

10. Système informatique selon la revendication 8 ou 9, dans lequel chaque nœud de la pluralité de nœuds est d'un type parmi un nombre de différents types de nœud, lesdits différents types de nœud comprenant un ou plusieurs types parmi :
un type de nœud de sécurité, qui est un type de nœud agencé pour appliquer un ou plusieurs mécanismes de sécurité pour protéger au moins un client de la pluralité de clients contre un accès non autorisé, un déni d'accès, une utilisation abusive, ou une modification du client ou d'une ressource informatique dans un réseau informatique auquel le client est connecté, chaque nœud dudit type de nœud de sécurité ayant une interface de communication avec ledit réseau informatique ;
un type de nœud d'orientation de trafic, qui est un type de nœud agencé pour contrôler le trafic de communication vers et depuis au moins un client de ladite pluralité de clients, chaque nœud dudit type de nœud d'orientation de trafic ayant une interface de communication avec au moins un client de ladite pluralité de clients ; et
un type de nœud intergiciel, qui est un type de nœud agencé pour fournir une interface pour un opérateur permettant à l'opérateur de régler ou changer des paramètres de configuration qui sont pris en compte par un ou plusieurs nœuds de type nœud de sécurité ou de type nœud d'orientation de trafic.

11. Système informatique selon la revendication 10, dans lequel le système informatique est agencé pour changer le type de nœud d'au moins un nœud de la pluralité de nœuds d'un type du nombre de types de nœud à un type différent du nombre de types de nœud.

12. Système informatique selon la revendication 11, dans lequel le système informatique est agencé pour changer automatiquement le type de nœud en réponse à une attribution changée dudit au moins un nœud à un groupe de réplication ou en réponse à une composition changée d'un groupe de réplication auquel ledit au moins un nœud est attribué.

13. Système informatique selon l'une des revendications 10 à 12, dans lequel le système informatique est agencé pour générer un nœud générique qui n'est d'aucun desdits types de nœud, modifier ledit nœud générique pour qu'il devienne un nouveau nœud d'un type dudit nombre de différents types de nœud, et ajouter ledit nouveau nœud à ladite pluralité de nœuds.
